# EUROPÄISCHE PATENTSCHRIFT

(11) **EP 3 430 882 B1**
(45) Veröffentlichungstag und Bekanntmachung des Hinweises auf die Patenterteilung: **12.08.2020**
(21) Anmeldenummer: 18000589.4
(22) Anmeldetag: 11.07.2018
(51) Int. Cl.: A01D 43/08

(54) **ERNTEGERÄT ZUM ERNTEN VON STÄNGELARTIGEM ERNTEGUT**
HARVESTING DEVICE FOR HARVESTING STALK CROPS
APPAREIL DE RÉCOLTE DESTINÉ À RÉCOLTER DES PRODUITS À TIGES

(30) Priorität: 21.07.2017 DE 102017006861
(43) Veröffentlichungstag der Anmeldung: 23.01.2019
(73) Patentinhaber: Maschinenfabrik Bernard Krone GmbH & Co. KG, 48480 Spelle (DE)
(72) Erfinder: Overmeyer, Bernward, 49497 Mettingen (DE); Riedel, Marcus, 52072 Aachen (DE)

(56) Entgegenhaltungen:
- EP-A1- 1 199 919
- DE-A1-102006 060 863
- DE-C1- 19 933 777

## Beschreibung

Die Erfindung bezieht sich auf ein Erntegerät zum Ernten von stängelartigem Erntegut, insbesondere Mais nach dem Oberbegriff des Patentanspruchs 1. Derartige Erntegeräte werden in der Regel im Frontanbau an einen selbstfahrenden Feldhäcksler oder dgl. landwirtschaftliche Erntemaschine angebaut, um dann beim Ernten von Mais die Pflanzenstängel bodennah abzutrennen und diese dann quer zur Fahrt- und Arbeitsrichtung einer Weiterverarbeitung in der Art einer Häckseleinrichtung zu zuführen.

Aus der DE 199 33 777 C1 ist ein Erntegerät bekannt geworden, bei dem ein Endlosförderer, bestehend aus einer Vielzahl von Förder- und Führungselementen in einer gelenkartig gebildeten und umlaufend angetriebenen Anordnung, wobei an der dem aufzunehmenden Erntegut zugewandten Seite der Förder- und Führungselemente mit Ausnehmungen zur Aufnahme von Pflanzenstängeln bildenden Mitnehmern vorgesehen sind. Diese Mitnehmer sind dazu in zumindest zwei übereinander liegenden Förder- und Führungsebenen an den Förder- und Führungselementen angebracht. Unterhalb der zumindest zwei Förder- und Führungsebenen befindet sich eine Schneidebene, in der mit den Förder- und Führungselementen verbundene Schneidmesser mit ortsfesten Gegenmessem des Emtegerätes zusammenwirken, um die Pflanzenstängel von dem Wurzelstock abzutrennen. Zur Führung der umlaufend angetriebenen Förder- und Führungselemente des Endlosförderers ist eine an einem Rahmen des Erntegerätes angebrachte Führungsschienenanordnung vorgesehen, in die Haltekanten an der dem aufzunehmenden Erntegut abgewandten Seite der Förder- und Führungselemente eingreifen. Ein Mangel einer solchen Anordnung ist darin zu sehen, dass die Zuordnung bzw. Zustellung der beweglichen Schneidmesser in Bezug zu den ortsfesten Gegenmessern nicht beeinflussbar ist.

Aufgabe der Erfindung ist es daher, ein Erntegerät zum Ernten von stängelartigem Erntegut vorzuschlagen, welches die Nachteile des Standes der Technik überwindet. Erfindungsgemäß wird die genannte Aufgabe durch ein Erntegerät zum Ernten von stängelartigem Erntegut gemäß Anspruch 1 gelöst. Bevorzugte Ausgestaltungen der Erfindung sind Gegenstand der abhängigen Ansprüche.

Gemäß der Erfindung wird ein Erntegerät zum Ernten von stängelartigem Erntegut mit einem umlaufend angetriebenen und in seiner längsten Ausrichtung quer zur Fahrt- und Arbeitsrichtung ausgerichteten Endlosförderer vorgeschlagen, der aus einer Vielzahl von gelenkartig miteinander verbundenen Förder- und Führungselementen gebildet ist, welche an der dem aufzunehmendem Erntegut zugewandten Seite eines jeden Förder- und Führungselementes zumindest zwei, in einem Abstand übereinanderliegende und Mitnehmer aufweisende Förder- und Führungsebenen sowie unterhalb dieser Förder- und Führungsebenen eine Schneidebene mit Schneidmessern umfasst, welche mit ortsfesten Gegenmessern des Erntegerätes zum Abtrennen des stängeligen Emtegutes zusammenwirken und wobei die Förder- und Führungselemente an der dem aufzunehmenden Erntegut abgewandten Seite mit einer Vorrichtung zur Führung entlang einer vorgegebenen Bewegungsbahn versehen sind, wobei jedem Förder- und Führungselement des Endlosförderers an der dem aufzunehmenden Erntegut abgewandten Seite eine Stützeinrichtung zugeordnet ist, welche dazu eingerichtet ist, den Auflagedruck der Schneidmesser auf die ortfesten Gegenmesser des Erntegerätes in Abhängigkeit von der in den Ausnehmungen zwischen den Mitnehmern der Förder- und Führungselemente geförderten Erntegutmenge zu steuern.

Erfindungsgemäß wird damit ein Erntegerät zum Ernten von stängelartigem Erntegut bereitgestellt, welches sich dadurch auszeichnet, dass die Förder- und Führungselemente eines Endlosförderers zur Aufnahme und Querförderung des stängelartigen Erntegutes so gestaltet sind, dass der Auflagedruck von in einem unteren Bereich der Förder- und Führungselemente angebrachten und mit diesen umlaufenden Schneidmessern auf ortsfest an einem Rahmen des Erntegerätes angebrachten Gegenmessern in vorteilhaften Weise derart steuerbar ist, dass die Menge an stängelartigem Erntegut, die in den Ausnehmungen zwischen den Mitnehmern der zumindest zwei Förder- und Führungsebenen eines jeden Förder- und Führungselementes gefördert wird, die Größe des Auflagedruckes bestimmt. Dazu ist jedem Förder- und Führungselement des Endlosförderers an seiner dem aufzunehmendem Erntegut abgewandten Seite eine Stützeinrichtung zugeordnet. Erfindungsgemäß besteht diese Stützeinrichtung aus einem, eine Druckkraft aufnehmenden Stützelement, das in einem oberen Bereich eines jeden Förder- und Führungselementes angebracht ist und aus einem, eine Druckkraft aufnehmenden Stützelement, welches in einem unteren Bereich eines jeden Förder- und Führungselementes angeordnet ist. Die Position des oberen, eine Druckkraft aufnehmenden Stützelementes ist dabei so gewählt, dass dieses sich oberhalb von zumindest einem, mit den Förder- und Führungselementen zusammenwirkenden Einweisbügels für das stängelartige Erntegut befindet. Dadurch wird in vorteilhafter Weise erreicht, dass die Anzahl von Pflanzenstängeln, die in dem Spalt zwischen der Vorderfront der Förder- und Führungselemente und dem Einweisbügel beim Erntevorgang geführt sind, ein Moment erzeugen, welches dafür sorgt, dass die mit den Förder- und Führungselementen umlaufenden Schneidmesser immer einen ausreichenden Auflagedruck auf die ortsfesten Gegenmesser am Rahmen des Erntegerätes ausüben. Das eine Druckkraft aufnehmende obere Stützelement kann dazu beispielsweise als Laufrolle ausgeführt sein, wobei die Laufrolle mit einer positionsveränderlich am Rahmen des Erntegerätes angebrachten Stützschiene zusammenwirkt. Die positionsveränderliche Anbringung der Stützschiene am Rahmen des Erntegerätes kann durch die Zwischenlage von Unterlegmaterial bei der Montage erreicht werden.

Bei dem unteren, eine Druckkraft aufnehmenden Stützelement handelt es sich um einen Gleitklotz oder eine Laufrolle, die in einer nach unten offenen U-förmigen Halteschiene eingreift, wobei die Innenabmessung der U-förmigen Halteschiene und die Außenabmessung von Rolle oder Gleitklotz so gewählt sind, dass zwischen Rolle oder Gleitklotz und der U-förmigen Halteschiene immer etwas Spiel verbleibt. Durch eine vorbestimmte Auswahl der Stärke des Unterlegmaterial bei der Montage der Stützschiene für das obere, eine Druckkraft aufnehmende Stützelement kann sogar eine Einstellung vorgenommen werden, bei der ein Anfangsauflagedruck zwischen den Schneidmessern der Förder- und Führungselemente und den ortsfesten Gegenmessern am Rahmen des Erntegerätes erzeugt wird.

Nachfolgend wird ein vorteilhaftes Ausführungsbeispiel der Erfindung anhand einer Zeichnung beschrieben. In der Zeichnung zeigt:
- Fig. 1:: eine perspektivische Ansicht eines landwirtschaftlichen Erntegerätes zum Ernten von stängelartigem Erntegut gemäß der Erfindung in der Arbeitsstellung;
- Fig. 2:: eine Schnittdarstellung des Erntegerätes zum Ernten von stängelartigem Erntegut nach Fig.1 entlang einer in Fahrt- und Arbeitsrichtung gerichteten Schnittebene;
- Fig. 3:: eine vergrößerte Darstellung der Einzelheit X nach Fig. 2;
- Fig. 4:: eine perspektivische Darstellung auf ein erfindungsgemäßes Förder- und Führungselement;

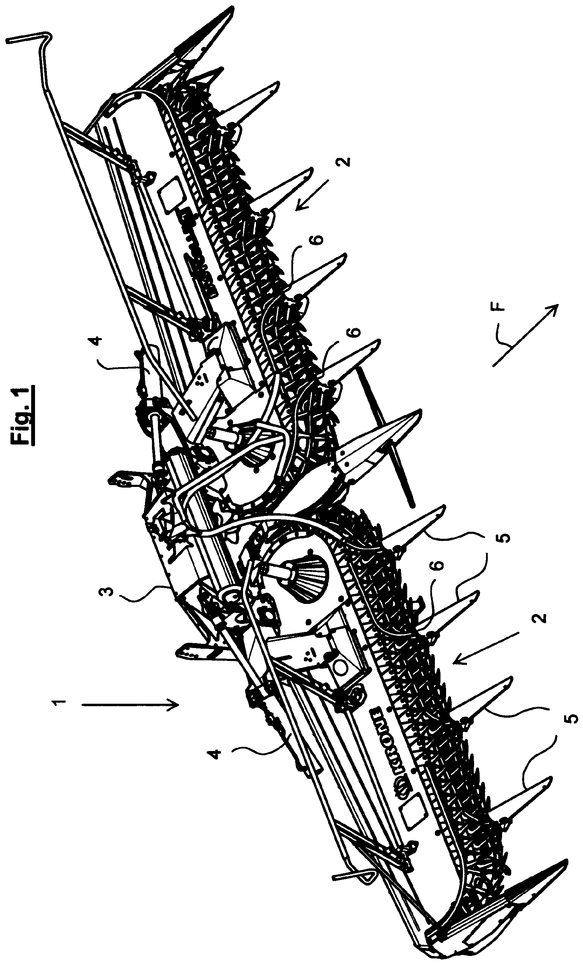

Ein Erntegerät 1 mit einem umlaufend angetriebenen Endlosförderer 2 zum Ernten von stängelartigem Erntegut in der Art von Mais oder dgl. ist in Fig. 1 näher veranschaulicht. Das Erntegerät 1 besteht hier aus einem linken und einem rechten Seitenteil, die symmetrisch zu einer Längsmittelebene schwenkbar an einem Tragrahmen 3 angebracht sind und mittels zweier hydraulischer Kolben-Zylinder-Anordnungen 4 aus der gezeigten Arbeitsstellung in eine etwa vertikale Transportstellung überführt werden können. Für den Arbeitseinsatz kann das Erntegerät 1 im Frontanbau an einen selbstfahrenden Feldhäcksler oder dgl. landwirtschaftliche Erntemaschine angekoppelt werden, um dann in Fahrt- und Arbeitsrichtung F über ein Feld bewegt zu werden und dabei stängelartiges Erntegut vom Wurzelstock abzutrennen und dieses quer zur Fahrt- und Arbeitsrichtung einer Einzugsöffnung zur Weiterverarbeitung zu zuführen. Wie weiterhin aus Fig. 1 hervorgeht, sind den beiden Endlosförderern 2 Einführspitzen 5 vorgeordnet, die den Prozess des Abtrennens und des anschließenden Querförderns durch den Endlosförderer 2 unterstützen.

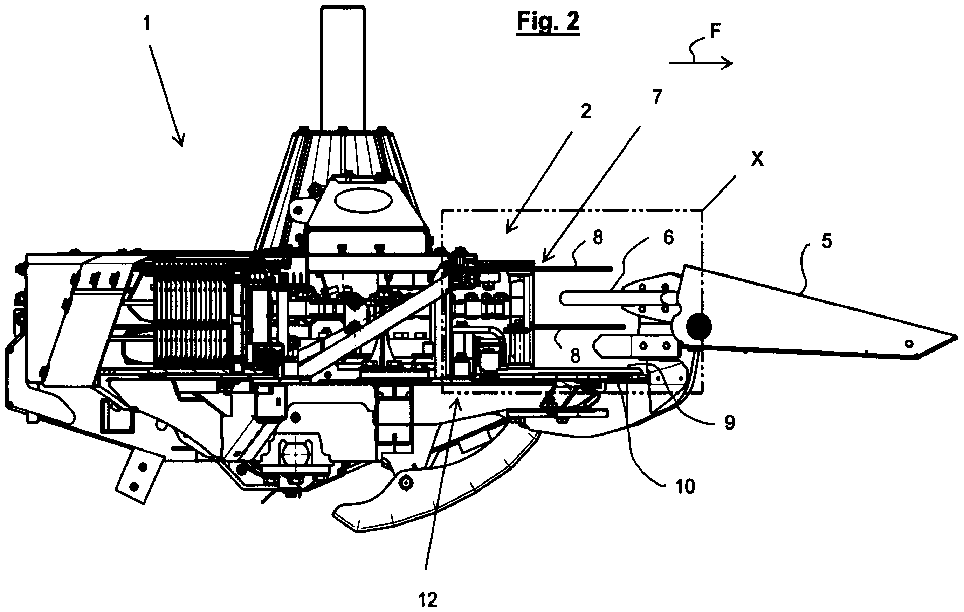

In Fig. 2 ist in einer Schnittdarstellung ein Querschnitt eines linken oder rechten Teiles des Erntegerätes 1 wiedergegeben. Ein vorderer Bereich der Darstellung zeigt die Anbringung der Zuführspitzen 5 an einem Rahmen des Erntegerätes 1. Weiterhin wird hier deutlich, dass an den Zuführspitzen sich Einweisbügel 6 anschließen, die sich in etwa quer vor dem Endlosförderer 2 erstrecken und damit einen Spalt ausbilden, in dem das stängelartige Erntegut während der Querförderung (Fig. 1) geführt wird.

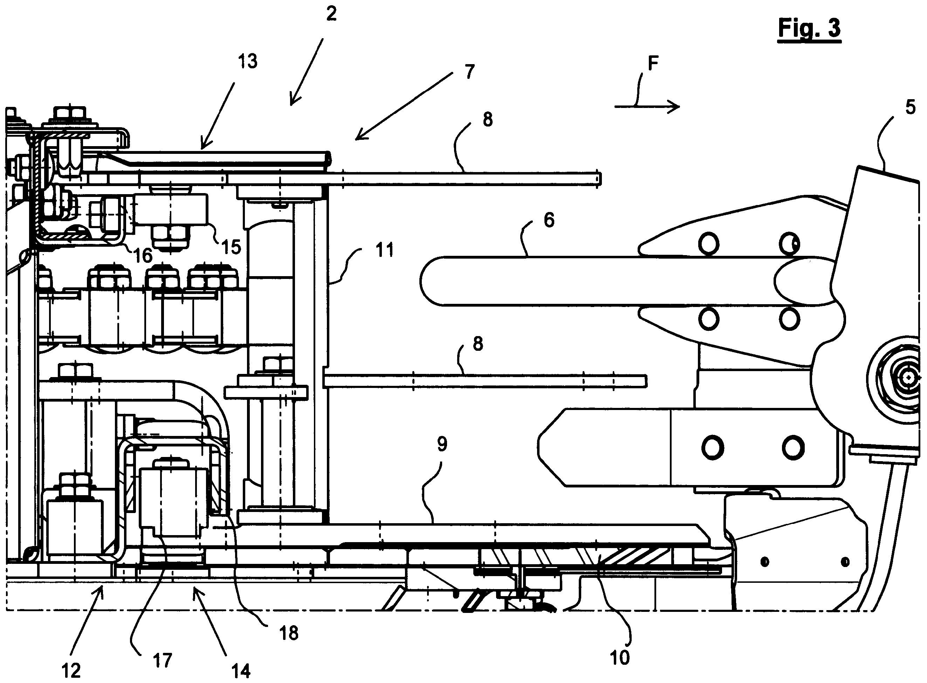

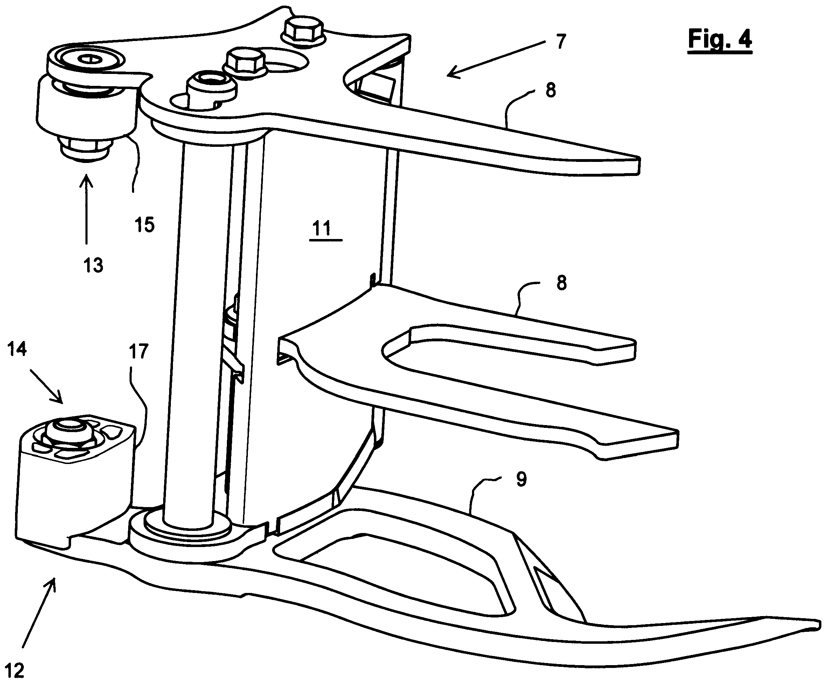

In der vergrößerten Darstellung in Fig. 3 ist ein erfindungsgemäßes Förder- und Führungselement 7 dargestellt, an dem in Fahrt- und Arbeitsrichtung F sich erstreckende Mitnehmer 8 in zumindest zwei übereinanderliegenden Förder- und Führungsebenen angeordnet sind. Unterhalb der zumindest zwei Förder- und Führungsebenen befindet sich eine Schneidebene, in der jeweils ein Schneidmesser 9 mit einem Förder- und Führungselement 7 verbunden ist. In der Schneidebene wirken die Schneidmesser 9 der Förder- und Führungselemente 7 mit ortsfesten Gegenmessern 10 zusammen, um das stängelartige Erntegut vom Wurzelstock abzutrennen. Zwischen den Mitnehmern 8 der Förder- und Führungselemente 7 befinden sich Ausnehmungen, in denen die Pflanzenstängel beim Abtrennen aufgenommen werden und dann zur Mitte des Erntegerätes weiter gefördert werden. In diesem Zusammenhang sei nochmals darauf hingewiesen, dass ein Endlosförderer 2 aus einer Vielzahl von Förder- und Führungselementen 7 (siehe auch Fig. 4) gebildet ist, wobei benachbarte Förder- und Führungselemente 7 gelenkartig aneinander gereiht und mit einander verbunden sind. Dem Erntegut zugewandt weisen die Förder- und Führungselemente 7 eine geschlossene Vorderfront 11 auf, die dazu dient, dass die Pflanzenstängel sich dort anlegen und somit in diesem Spalt zwischen der Vorderfront 11 der Förder- und Führungselemente 7 und den Einweisbügeln 6 geführt werden.

Wie weiterhin aus Fig. 3 ersichtlich ist, ist jedem Förder- und Führungselement 7 eine Stützeinrichtung 12 zugeordnet, welche wiederum aus einem oberen, eine Druckkraft aufnehmenden Stützelement 13 und einem unteren, eine Druck- oder Zugkraft aufnehmenden Stützelement 14 besteht. Das obere, eine Druckkraft aufnehmenden Stützelement 13 ist vorteilhaft als Laufrolle 15 ausgeführt und wirkt mit einer Stützschiene 16 zusammen, die positionsveränderlich an einem Rahmen des Erntegerätes 1 angebracht ist. Die positionsveränderliche Anbringung der Stützschiene 16 am Rahmen des Erntegerätes 1 kann durch die Zwischenlage von Unterlegmaterial bei der Montage erreicht werden. Hierdurch kann eine Grundeinstellung der Zuordnung der Schneidmesser 9 der Förder- und Führungselemente 7 zu den ortsfesten Gegenmesser 10 vorgenommen werden. Bei dem unteren, eine Zug- oder Druckkraft aufnehmenden Stützelement 14 handelt es sich um einen Gleitklotz 17, der in einer nach unten offenen U-förmigen Halteschiene 18 eingreift, wobei die U-förmigen Halteschiene 18 und die Außenabmessung des Gleitklotzes 17 im zusammengefügten Zustand immer etwas Spiel aufweisen.

Fig. 4 zeigt ein Förder- und Führungselement 7 in einer perspektivischen Darstellung. Aus dieser Figur wird besonders deutlich, wie durch das Aneinanderreihen von Förder- und Führungselementen 7 ein Endlosförderer 2 entsteht, in dessen Ausnehmungen zwischen den Mitnehmern 8 der Förder- und Führungselemente 7 stängelartiges Erntegut vom Wurzelstock abgetrennt und quer zur Fahrt- und Arbeitsrichtung F einer Weiterverarbeitung zugeführt werden kann.

Im Hinblick auf die Funktion wird damit ein Erntegerät 1 zum Ernten von stängelartigem Erntegut bereitgestellt, welche sich dadurch auszeichnet, dass die Förder- und Führungselemente 7 des Endlosförderers 2 so gestaltet sind, dass der Auflagedruck von in einem unteren Bereich der Förder- und Führungselemente 7 angebrachten und mit diesen umlaufenden Schneidmessern 9 auf ortsfest an einem Rahmen des Erntegerätes angebrachten Gegenmessern 10 in vorteilhaften Weise derart steuerbar ist, dass die Menge an stängelartigem Erntegut, die in den Ausnehmungen zwischen den Mitnehmern 8 der zumindest zwei Förder- und Führungsebenen eines jeden Förder- und Führungselementes 7 gefördert wird, die Größe des Auflagedruckes bestimmt. Dazu ist jedem Förder- und Führungselement 7 des Endlosförderers 2 an seiner dem aufzunehmendem Erntegut abgewandten Seite eine Stützeinrichtung 12 zugeordnet. Vorteilhaft besteht diese Stützeinrichtung 12 aus einem, eine Druckkraft aufnehmenden Stützelement 13, das in einem oberen Bereich eines jeden Förder- und Führungselementes 7 angebracht ist und aus einem, eine Zug- oder Druckkraft aufnehmenden Stützelement 14, welches in einem unteren Bereich eines jeden Förder- und Führungselementes 7 angeordnet ist. Die Position des oberen, eine Druckkraft aufnehmenden Stützelementes 13 ist dabei so gewählt, dass dieses sich oberhalb von zumindest einem, mit den Förder- und Führungselementen 7 zusammenwirkenden Einweisbügels 6 für das stängelartige Erntegut befindet. Dadurch wird in vorteilhafter Weise erreicht, dass die Anzahl von Pflanzenstängeln, die in dem Spalt zwischen der Vorderfront 11 der Förder- und Führungselemente 7 und dem Einweisbügel 6 beim Erntevorgang geführt sind, ein Moment erzeugen, welches dafür sorgt, dass die mit den Förder- und Führungselementen 7 umlaufenden Schneidmesser 9 immer einen ausreichenden Auflagedruck auf die ortsfesten Gegenmesser 10 am Rahmen des Erntegerätes 1 ausüben.

In einer Weiterbildung der Erfindung kann der Auflagedruck der Schneidmesser 9 der

Förder- und Führungselemente 7 auf die ortsfesten Gegenmesser 10 jedoch auch so eingestellt werden, dass bereits ein Anfangsauflagedruck vorherrscht, obwohl sich noch kein stängelartiges Erntegut in dem Spalt zwischen der Vorderfront 11 der Förder- und Führungselemente 7 und den Einweisbügeln 6 befindet. Eine solche Voreinstellung kann dadurch erreicht werden, dass durch die Zwischenlage einer vorbestimmten Stärke an Unterlegmaterial bei der Anbringung der Stützschiene 16 eine Positionsveränderung vorgenommen wird und damit das obere Stützelement 13 und das untere Stützelement 14 gegeneinander verspannt werden.

## Patentansprüche

1. Erntegerät (1) zum Ernten von stängelartigem Erntegut mit einem umlaufend angetriebenen und in seiner längsten Ausrichtung quer zur Fahrt- und Arbeitsrichtung (F) ausgerichteten Endlosförderer (2), der aus einer Vielzahl von gelenkartig miteinander verbundenen Förder- und Führungselementen (7) gebildet ist, welche an der dem aufzunehmendem Erntegut zugewandten Seite eines jeden Förder- und Führungselementes (7) zumindest zwei, in einem Abstand übereinanderliegende und Mitnehmer (8) aufweisende Förder- und Führungsebenen sowie unterhalb dieser Förder- und Führungsebenen eine Schneidebene mit Schneidmessern (9) umfasst, welche mit ortsfesten Gegenmessern (10) des Erntegerätes (1) zum Abtrennen des stängeligen Erntegutes zusammenwirken und wobei die Förder- und Führungselemente (7) an der dem aufzunehmenden Erntegut abgewandten Seite mit einer Vorrichtung zur Führung entlang einer vorgegebenen Bewegungsbahn versehen sind, wobei jedem Förder- und Führungselement (7) des Endlosförderers (2) an der dem aufzunehmenden Erntegut abgewandten Seite eine Stützeinrichtung (12) zugeordnet ist, welche dazu eingerichtet ist, den Auflagedruck der Schneidmesser (9) auf die ortfesten Gegenmesser (10) des Erntegerätes (1) in Abhängigkeit von der in den Ausnehmungen zwischen den Mitnehmern (8) der Förder- und Führungselemente (7) geförderten Erntegutmenge zu steuern, wobei die Stützeinrichtung (12) ein unteres Stützelement (14) umfasst, **dadurch gekennzeichnet, dass** die Stützeinrichtung (12) aus einem oberen, eine Druckkraft aufnehmenden Stützelement (13) und dem unteren, eine Druckkraft aufnehmenden Stützelement (14) gebildet ist, wobei die Position des oberen, eine Druckkraft aufnehmenden Stützelementes (13) dabei so gewählt ist, dass dieses sich oberhalb von zumindest einem, mit den Förder- und Führungselementen (7) zusammenwirkenden Einweisbügels (6) für das stängelartige Erntegut befindet.

2. Erntegerät (1) zum Ernten von stängelartigem Erntegut nach Anspruch 1, **dadurch gekennzeichnet, dass** dem oberen, eine Druckkraft aufnehmenden Stützelement (13) eine Stützschiene (16) zugeordnet ist, die sich über den geradlinigen Bereich des Arbeitstrums des Endlosförderers (2) erstreckt.

3. Erntegerät (1) zum Ernten von stängelartigem Erntegut nach Anspruch 2, **dadurch gekennzeichnet, dass** das obere, eine Druckkraft aufnehmende Stützelement (13) als Laufrolle (15) ausgebildet ist.

4. Erntegerät (1) zum Ernten von stängelartigem Erntegut nach zumindest einem der Ansprüche 1 bis 2, **dadurch gekennzeichnet, dass** die mit dem oberen, eine Druckkraft aufnehmenden Stützelement (13) zusammenwirkende Stützschiene (16) lageveränderlich am Rahmen des Erntegerätes (1) angebracht ist.

5. Erntegerät (1) zum Ernten von stängelartigem Erntegut nach zumindest einem der Ansprüche 1 bis 2, **dadurch gekennzeichnet, dass** das untere, eine Druck- oder Zugkraft aufnehmende Stützelement (14) in eine nach unten offenen, U-förmigen Halteschiene (18) eingreift.

6. Erntegerät (1) zum Ernten von stängelartigem Erntegut nach Anspruch 5, **dadurch gekennzeichnet, dass** das untere, eine Druck- oder Zugkraft aufnehmende Stützelement (14) als Gleitklotz (17) ausgeführt ist.

7. Erntegerät (1) zum Ernten von stängelartigem Erntegut nach Anspruch 5, **dadurch gekennzeichnet, dass** das untere, eine Druck- oder Zugkraft aufnehmende Stützelement (14) eine Laufrolle ist.

8. Erntegerät (1) zum Ernten von stängelartigem Erntegut nach zumindest einem der Ansprüche 1 bis 7, **dadurch gekennzeichnet, dass** das obere, eine Druckkraft aufnehmenden Stützelement (13) und das untere, eine Druck- oder Zugkraft aufnehmenden Stützelement (14) in Bezug auf ihre Positionierung an einem Rahmen des Erntegerätes (1) so angeordnet sind, dass bereits ohne den Einfluss des Erntegutes ein Anfangsauflagedruck zwischen den Schneidmessern (9) der Förder- und Führungselemente (7) und den ortsfesten Gegenmessern (10) vorhanden ist.

## Claims

1. Harvesting device (1) for harvesting stalk-like crops, comprising an endless conveyor (2) which is driven in circulation and which, in its longest orientation, is oriented transversely to the travel and working direction (F), which conveyor is formed by a large number of hingedly interconnected conveying and guiding elements (7), which comprises, on the side of each conveying and guiding element (7) facing the crops to be picked up, at least two conveying and guiding planes which lie one above the other at a distance and have drivers (8), and which comprises, below said conveying and guiding planes, a cutting plane having cutting blades (9) which interact with stationary counter blades (10) of the harvesting device (1) in order to separate the stalky crops, and the conveying and guiding elements (7) being provided, on the side facing away from the crops to be picked up, with an apparatus for guiding along a predetermined movement path, each conveying and guiding element (7) of the endless conveyor (2) being associated, on the side facing away from the crops to be picked up, with a support means (12) which is designed to control the contact pressure of the cutting blades (9) on the stationary counter blades (10) of the harvesting device (1) on the basis of the amount of crops conveyed in the recesses between the drivers (8) of the conveying and guiding elements (7), the support means (12) comprising a lower support element (14), **characterised in that** the support means (12) is formed by an upper support element (13) that absorbs a compressive force and the lower support element (14) that absorbs a compressive force, the position of the upper support element (13) that absorbs a compressive force being selected such that it is above at least one feed bow (6) for the stalk-like crops which interacts with the conveying and guiding elements (7).

2. Harvesting device (1) for harvesting stalk-like crops according to claim 1, **characterised in that** a support rail (16) is associated with the upper support element (13) that absorbs a compressive force, which support rail extends over the rectilinear region of the working side of the endless conveyor (2).

3. Harvesting device (1) for harvesting stalk-like crops according to claim 2, **characterised in that** the upper support element (13) that absorbs a compressive force is designed as a roller (15).

4. Harvesting device (1) for harvesting stalk-like crops according to at least one of claims 1 to 2, **characterised in that** the support rail (16) interacting with the upper support element (13) that absorbs a compressive force is mounted on the frame of the harvesting device (1) such that the position of said rail can change.

5. Harvesting device (1) for harvesting stalk-like crops according to at least one of claims 1 to 2, **characterised in that** the lower support element (14) that absorbs a compressive or tensile force engages in an egg-shaped holding rail (18) that is open at the bottom.

6. Harvesting device (1) for harvesting stalk-like crops according to claim 5, **characterised in that** the lower support element (14) that absorbs a compressive or tensile force is designed as a sliding block (17).

7. Harvesting device (1) for harvesting stalk-like crops according to claim 5, **characterised in that** the lower support element (14) that absorbs a compressive or tensile force is a roller.

8. Harvesting device (1) for harvesting stalk-like crops according to at least one of claims 1 to 7, **characterised in that** the upper support element (13) that absorbs a compressive force and the lower support element (14) that absorbs a compressive or tensile force are arranged, with respect to their positioning on a frame of the harvesting device (1), such that there is already an initial contact pressure between the cutting blades (9) of the conveying and guiding elements (7) and the stationary counter blades (10) without the influence of the crops.

## Revendications

1. Appareil de récolte (1) pour récolter des produits en tige comportant un transporteur sans fin (2) entraîné en circulation et dont l'orientation la plus longue est transversale à la direction de circulation et de travail (F),
- ce transporteur se composant d'un ensemble d'éléments de transfert et de guidage (7) reliés de manière articulée les uns aux autres, et ayant sur le côté tourné vers le produit à recevoir, de chaque élément de transfert et de guidage (7), au moins deux plans de transfert et de guidage superposés de façon écartée et comportant des organes d'entraînement (8) ainsi qu'en dessous de ces plans de transfert et de guidage, un plan de coupe avec des couteaux (9) coopérant avec des contre-couteux (10) fixes de l'appareil (1) pour couper le produit en tige et,
- les éléments de transfert et de guidage (7) ayant sur le côté opposé au produit à recevoir, un dispositif de guidage le long d'un chemin prédéfini,
- une installation d'appui (12) étant associée à chaque élément de transfert et de guidage (7) du transporteur sans fin (2) sur le côté non tourné vers le produit à recevoir, cette installation d'appui étant conçue pour transmettre la pression d'appui des couteaux (9) aux contre-couteaux fixes (10) de l'appareil (1) en fonction de la quantité de produits transférés dans les évidements entre les organes d'entraînement (8) des éléments de transfert et de guidage (7),
- l'installation d'appui (12) ayant un élément d'appui inférieur (14),
appareil **caractérisé en ce que**
l'installation d'appui (12) se compose d'un élément d'appui supérieur (13) recevant une force de poussée et d'un élément d'appui inférieur (14) recevant une force de poussée,
la position de l'élément d'appui supérieur (13) recevant une force de poussée étant choisie pour être au-dessus d'au moins un arceau d'entrée (6) coopérant avec les éléments de transfert et de guidage (7) du produit de récolte en tige.

2. Appareil de récolte pour récolter des produits en tige (1) selon la revendication 1,
**caractérisé en ce qu'**
un rail d'appui (16) est associé à l'élément d'appui supérieur (13) recevant la poussée, ce rail s'étendant sur la plage rectiligne du brin actif du transporteur sans fin (2).

3. Appareil de récolte pour récolter des produits en tige (1) selon la revendication 2,
**caractérisé en ce que**
l'élément d'appui supérieur (13) recevant une force de poussée est réalisé sous la forme d'un galet (15).

4. Appareil de récolte pour récolter des produits en tige (1) selon l'une des revendications 1 et 2,
**caractérisé en ce que**
le rail d'appui (16) coopérant avec l'élément d'appui supérieur (13) recevant une force de poussée est monté en position variable sur le châssis de l'appareil (1).

5. Appareil de récolte pour récolter des produits en tige (1) selon l'une des revendications 1 et 2,
**caractérisé en ce que**
l'élément d'appui inférieur (14) recevant une force de poussée ou de traction pénètre dans un rail de maintien (18) en forme de U dont l'ouverture est tournée vers le bas.

6. Appareil de récolte pour récolter des produits en tige (1) selon la revendication 5,
**caractérisé en ce que**
l'élément d'appui inférieur (14) recevant une force de poussée ou de traction est sous la forme de bloc coulissant (17).

7. Appareil de récolte pour récolter des produits en tige (1) selon la revendication 5,
**caractérisé en ce que**
l'élément d'appui inférieur (14) recevant une force de poussée ou de traction est un galet.

8. Appareil de récolte pour récolter des produits en tige (1) selon l'une des revendications 1 à 7,
**caractérisé en ce que**
l'élément d'appui supérieur (13) recevant une force de poussée et l'élément d'appui inférieur (14) recevant une force de poussée ou de traction sont installés dans leur positionnement sur le châssis de l'appareil de récolte (1) pour avoir sans l'influence du produit à récolter, une pression d'appui initiale entre les couteaux (9) des éléments de transfert et de guidage (7) et les contre-couteaux fixes (10).
